# EUROPÄISCHE PATENTSCHRIFT

(11) **EP 1 617 968 B1**
(45) Veröffentlichungstag und Bekanntmachung des Hinweises auf die Patenterteilung: **01.03.2017**
(21) Anmeldenummer: 04728514.3
(22) Anmeldetag: 21.04.2004
(51) Int. Cl.: B23K 35/26

(54) **LOTMATERIAL AUF SNAGCU-BASIS**
SOLDERING MATERIAL BASED ON SN AG AND CU
METAL D'APPORT DE BRASAGE A BASE SNAGCU

(30) Priorität: 25.04.2003 DE 10319888
(43) Veröffentlichungstag der Anmeldung: 25.01.2006
(73) Patentinhaber: Henkel AG & Co. KGaA, 40589 Düsseldorf (DE); Alpha Metals Inc., Somerset NJ 08873 (US); Heraeus Deutschland GmbH & Co. KG, 63450 Hanau (DE)
(72) Erfinder: ALBRECHT, Hans-Jürgen, 13051 Berlin (DE); BARTL, Klaus Heinrich Georg, 45136 Essen (DE); KRUPPA, Werner, 45130 Essen (DE); MÜLLER, Klaus, 93186 Pettendorf (DE); NOWOTTNICK, Mathias, 10245 Berlin (DE); PETZOLD, Gunnar, 01309 Dresden (DE); STEEN, Hector Andrew Hamilton, Hemel Hempstead, Herts HP3 9RD (GB); WILKE, Klaus, 12527 Berlin (DE); WITTKE, Klaus, 12165 Berlin (DE)
(86) Internationale Anmeldenummer: PCT/DE2004/000852
(87) Internationale Veröffentlichungsnummer: WO 2004/096484

(56) Entgegenhaltungen:
- EP-A1- 0 629 466
- EP-A1- 0 847 829
- WO-A1-00/48784
- WO-A1-01/03878
- DE-A1- 3 830 694
- US-A- 6 156 132

## Beschreibung

Die Erfindung betrifft ein Lotmaterial, enthaltend eine ein Sechsstoffsystem bildende Legierung, die neben Sn (Zinn) als Hauptbestandteil aus 10 Gew.-% oder weniger Ag (Sil- ber), 10 Gew. -% oder weniger Bi (Wismut), 10 Gew.-% oder we- niger Sb (Antimon), 3 Gew.-% oder weniger Cu (Kupfer) und 1,0 Gew.-% oder weniger Ni (Nickel) besteht. Weiterhin betrifft die Erfindung ein Lotmaterial, enthaltend mehrere Lotkomponenten mit derartigen Legierungszusammensetzungen und Anteilen im Lotmaterial, das sich durch Verschmelzung der Lotkomponente eine Legierung bildet, die die oben genannten Elemente in den dort angegebenen Legierungsanteilen enthält.

Lotmaterialien der eingangs aufgeführten Zusammensetzung werden insbesondere verwendet, wenn allgemein gebräuchliche, bleihaltige Lotmaterialien wegen der ungünstigen Umweltverträglichkeit von Blei ersetzt werden sollen. So ist beispielsweise in der internationalen Patentanmeldung WO 01/03878 A1 ein Lotmaterial beschrieben, welches neben Sn als Hauptbestandteil bis zu 10% Ag, bis zu 5% Cu, bis zu 10% Sb und bis zu 10% Bi enthält. Weiterhin ist aus der europäischen Patentanmeldung EP 0 629 466 A1 ein Lotmaterial bekannt, welches mindestens 90 Gew.-% Sn und als weitere Bestandteile Ag, Bi, Sb und Cu enthält. Aus der internationalen Patentanmeldung WO 00/48784 ist außerdem ein als Reaktionslot ausgebildetes Lotmaterial mit mehreren Lotkomponenten bekannt, welche durch Verschmelzung der Lotkomponenten eine Legierung bildet, in der neben Sn als Hauptkomponente 1-10% Bi, bis zu 5% Sb, bis zu 3% Cu und bis zu 6% Ag enthalten sind.

Die genannten Lotmaterialien basieren auf dem SnAgCu-Dreistoffsystem, welches insbesondere in der Zusammensetzung SnAg3, 8Cu0, 7 ein Eutektikum bildet, dessen Schmelzpunkt bei 217°C liegt. Es ist weiterhin bekannt, dass dieser Schmelzpunkt beispielsweise durch Zulegierung von Bi mit einem Legierungsanteil von bis zu 10 Gew.-% abgesenkt werden kann. Bi kann auch als Komponente in einem Reaktionslot Verwendung finden, beispielsweise lässt sich die bereits erwähnte eutektische SnAgCu-Legierung als eine Komponente mit Sn43Bi47 als andere Komponente mit einem Schmelzpunkt von 138°C mischen, wodurch das Reaktionslot bei einer wesentlich geringeren Temperatur zu schmelzen beginnt.

Die WO 01/03878 beschreibt ein Lotmaterial basierend auf dem SnAgCu-Dreistoffsystem, das aus bis zu fünf Elementen bestehen kann, die ausgewählt sind aus Zinn (Sn), Silber (Ag), Kupfer (Cu), Antimon (Sb) und Wismut (Bi). Zusätzlich können noch geringe Anteile an Phosphor enthalten sein.

Auch in der WO 00/48784, die ein Verfahren zur Befestigung einer Chipkomponente an einer gedruckten Schaltung betrifft, sind Lotmaterialien aufgeführt, die aus 1-10% Wismut, bis zu 5% Kupfer (Cu), bis zu 10% Silber (Ag), bis zu 5% Antimon (Sb) und als Rest Zinn (Sn) zusammengesetzt sind, wobei eines der Elemente Cu, Ag oder Sb in einer Mindestmenge von 0,1% enthalten sein muss.

Die Aufgabe der Erfindung besteht darin, ein Lotmaterial auf Basis des SnAgCu-Systems anzugeben, welches einen vergleichsweise geringen Schmelzpunkt aufweist und gleichzeitig für möglichst hohe Betriebstemperaturen der zu bildenden Lötverbindungen ausgelegt ist.

Diese Aufgabe wird erfindungsgemäß dadurch gelöst, dass die Legierung des Lotmaterials weiterhin 1,0 Gew.-% oder weniger Ni (Nickel) enthält. Für den Fall, dass das Lotmaterial beispielsweise als Reaktionslot mit mehreren Lotkomponenten ausgebildet ist, wird die Aufgabe erfindungsgemäß dadurch gelöst, dass in zumindest einer der Lotkomponenten weiterhin Ni in einer derartigen Menge enthalten ist, dass die aus Verschmelzung der Lotkomponenten gewonnene Legierung 1,0 Gew.-% oder weniger Ni enthält.

Der Gegenstand der vorliegenden Erfindung betrifft demnach ein Lotmaterial gemäß Anspruch 1 enthaltend eine ein Sechstoffsystem bildende Legierung sowie ein Lotmaterial gemäß Anspruch 2, das aus mehreren Lotkomponenten zusammengesetzt ist und durch Verschmelzung der Lotkomponenten ein Sechstoffsystem bildet.

Für das so erhaltene Sechsstoffsystem hat es sich nämlich gezeigt, dass sich die Schmelztemperatur des Lotmaterials unter die eutektoide Schmelztemperatur des Dreistoffsystems SnAgCu von 217°C absenken lässt, so dass beispielsweise bei einer Peaktemperatur in einem Reflowlötofen von 230°C ein genügender Abstand zum Schmelzpunkt des Lotmaterials gewährleistet ist, um eine zuverlässige Ausbildung der zu erzeugenden Lötverbindungen sicher zu stellen. Dabei wird dem Umstand Rechnung getragen, dass die in der IEC vorgesehenen Höchstwerte der Einbringung von Wärme in zu lötende Bauelemente von 260°C über einen Zeitraum von 10 s bei modernen Bauelementen komplexen Aufbaus von den Herstellern nicht mehr gewährleistet werden. Die zulässigen Peaktemperaturen für diese so genannten advanced packages liegen bei 230°C über einen Zeitraum von 10 s.

Durch die Zulegierung von bis zu 1,0 Gew.-% oder weniger Nickel zu dem Fünfstoffsystem SnAgCuBiSb wird der Schmelzpunkt des so erhaltenen Lotmaterials nicht wesentlich beeinflusst. Es hat sich aber überraschenderweise gezeigt, dass die Zulegierung von Ni mit einer deutlichen Verbesserung der Kriechbeständigkeit des Lotmaterials verbunden ist. Hierdurch werden vorteilhaft erhöhte Betriebstemperaturen der zu erzeugenden Lotverbindungen möglich. Die heute häufig geforderten Betriebstemperaturen von bis zu 150°C können daher durch die Verwendung des erfindungsgemäßen Lotmaterials ohne weiteres gewährleistet werden. Durch gezielte Einstellung der Legierungsanteile des erfindungsgemäßen Sechsstoffsystems kann sogar ein Lotmaterial bereitgestellt werden, welches den bereits teilweise geforderten Betriebstemperaturen von bis zu 180°C gerecht wird.

Die Verbesserung der Kriechbeständigkeit von Lötverbindungen aus dem erfindungsgemäßen Lotmaterial lässt sich dadurch erklären, dass Ni mit Bi intermetallische Phasen (NiBi mit ca. 75 Gew.-% Bi bzw. NiBi₃ mit ca. 91 Gew.-% Bi) bildet, die bevorzugt an den Korngrenzen ausgeschieden werden und dadurch zu einer Dispersionsverfestigung des Lotgefüges führen. Gleichzeitig wird elementares Bi in das Innere der Körner der Lötverbindung verdrängt, wodurch eine Mischkristallhärtung bewirkt wird, die ebenfalls zur Verbesserung der Kriechbeständigkeit beiträgt. Zusätzlich wird dabei verhindert, dass der Legierungsanteil Bi mit anderen Legierungsanteilen, insbesondere mit Sn lokal Legierungszusammensetzungen mit niedrigschmelzenden Eutektika ausbildet, welche zu einem lokalen Aufschmelzen der Lotverbindung bei geringen Temperaturen und damit zu einem dramatischen Abfall der Kriechbeständigkeit führen würden (Eutektikum des Legierungssystems SnBi beispielsweise bei 138°C).

Die erläuterte positive Wirkung von Ni auf die Kriechbeständigkeit durch die Einwirkung von Ni auf den Legierungsbestandteil Bi ist jedoch nur zu beobachten, wenn für Bi ein Anteil in der Legierungszusammensetzung von 10 Gew.-% nicht überschritten wird. Hierin ist auch ein wesentlicher Unterschied zu einem Lotmaterial gemäß der deutschen Offenlegungsschrift DE 199 04 765 A1 zu sehen, in der zwar Sn, Ag, Cu, Bi, Sb und Ni enthaltende Legierungen offenbart sind, jedoch der Legierungsanteil von Bi zwischen 43 und 58 Gew.-% liegt. Dies führt aufgrund des bereits erwähnten Eutektikums des SnBi-Systems von 138°C zu Schmelzpunkten der in der DE 199 04 765 A1 offenbarten Lotmaterialien, die nicht höher als 140°C liegen. Eine Eignung von diesen Lotmaterialien für Lötverbindungen mit einer Betriebstemperatur von bis zu 150°C ist daher bei diesen Lotmaterialien nicht gegeben, da diese bei 150°C bereits verflüssigt wären. Aufgrund des verglichen mit dem erfindungsgemäßen Lotmaterial um über 20% höheren Bi-Anteils sind im Übrigen die für das erfindungsgemäße Lotmaterial beschriebenen Verfestigungsmechanismen nicht übertragbar auf die Lotmaterialien gemäß DE 199 04 765 A1.

Gemäß einer vorteilhaften Ausgestaltung der Erfindung enthält' die Legierung 2 bis 5 Gew.-% Ag, 1 bis 3 Gew.-% Bi, 1 bis 3 Gew.-% Sb, 0,5 bis 1,5 Gew.-% Cu und 0,05 bis 0,3 Gew.-% Ni. Die Zulegierung der Legierungselemente zu Sn in den angegebenen Bereichen hat sich als besonders vorteilhaft erwiesen, da sich das SnAgCu-System als Grundlage der Legierung im naheutektischen Bereich befindet und sich insbesondere mittels der weiteren Legierungskomponenten Bi, Sb und Ni eine ausgewogene Kombination der Effekte zur Absenkung der Schmelztemperatur bezüglich des SnAgCu-Eutektikums und zur Verbesserung der Kriechbeständigkeit erzielen lassen. Hierbei ist die besondere Bedeutung des Legierungsanteiles an Ni zu erwähnen, welches lediglich bis zu einer Höhe von ungefähr 0,2 Gew.-% im Gefüge der Lötverbindung löslich ist, so dass der 0,2 Gew.-% übersteigende Anteil an Nickel die Ausscheidung von anderen Legierungselementen vorrangig an den Korngrenzen provoziert und so zu einer Dispersionsverfestigung führt.

Ein besonderes Reaktionslot oder auch Schichtlot erhält man durch ein Lotmaterial, welches eine Lotkomponente M1 und eine weitere Lotkomponente M2 enthält, wobei die Lotkomponente M1 neben Sn als Hauptbestandteil 2 bis 5 Gew.-% Ag, 3 bis 12 Gew.-% Bi, 0,5 bis 1,5 Gew.-% Cu und 0,1 bis 0,3 Gew.-% Ni und die weitere Lotkomponente M2 neben Sn als Hauptbestandteil 2 bis 5 Gew.-% Ag, 0,5 bis 1,5 Gew.-% Cu, 1 bis 5 Gew.-% Sb und 1,0 Gew.-% Ni enthält. Ein weiteres Reaktionslot/Schichtlot nach einer anderen Ausgestaltung der Erfindung besteht aus einem Lotmaterial, bei dem eine Lotkomponente M1 und eine weitere Lotkomponente M2 vorgesehen sind, wobei die Lotkomponente M1 neben Sn als Hauptbestandteil 2 bis 5 Gew.-% Ag, 3 bis 6 Gew.-% Bi, 1 bis 3 Gew.-% Sb und 0,5 bis 1,5 Gew.-% Cu und die weitere Lotkomponente M2 neben Sn als Hauptbestandteil 2 bis 5 Gew.-% Ag, 0,5 bis 1,5 Gew.-% Cu und 1,0 Gew.-% Nickel enthält.

Bei beiden Varianten des Reaktionslotes/Schichtlotes ist der Bi-Anteil der zu bildenden Lotverbindung in der Lotkomponente M1 konzentriert, während die Lotkomponente M2 Bi-frei ist. Hierdurch wird der Schmelzpunkt der Lotkomponente M1 im Verhältnis zur Lotkomponente M2 abgesenkt, wodurch in dem Lotmaterial Lotkomponenten verschiedener Schmelzpunkte miteinander kombiniert sind. Die niedrigschmelzende Lotkomponente bewirkt vorteilhaft die Benetzung von den Lotanschlussflächen (beispielsweise an Bauteil und Substrat) bereits bei niedrigen Temperaturen. Während des Lötprozesses erfolgt dann eine Legierungsbildung zwischen den Lotkomponenten M1 und M2, wobei die dabei entstehende homogene Legierung einen höheren Schmelzpunkt aufweist, als die niedriger schmelzende Lotkomponente M1. Die entstehenden Legierungszusammensetzungen der homogenen Legierung sind, wie oben bereits beschrieben, vorteilhaft durch eine hohe Kriechfestigkeit gekennzeichnet. Damit können die bereits erwähnten, geforderten hohen Einsatztemperaturen für die Lötverbindung gewährleistet werden. Vergleiche bei der Verarbeitung von Fertiglotpulvern mit einer einzigen Lotkomponente und Reaktionslotpulvern mit einer Mischung von zwei Lotkomponenten haben außerdem ergeben, dass sich die Prozesstemperaturen für den Lötvorgang um 5 bis 10°C absenken lassen. Dies lässt sich damit begründen, dass nach Überschreiten der Schmelztemperatur der niedrigschmelzenden Lotkomponente M1 die höherschmelzende Lotkomponente M2 durch die geschmolzene Lotkomponente M1 angelöst wird, wobei bereits deutlich unterhalb der Schmelztemperatur der Ziellegierung, d. h. der Legierung, die durch die homogene Mischung der Lotkomponenten M1 und M2 entsteht, eine Benetzung der Kontaktflächen der Lötverbindung stattfindet.

Eine weitere Ausgestaltung der Erfindung sieht vor, dass die Lotkomponente M1 und die weitere Lotkomponente M2 im Verhältnis M1 : M2 = 1 : 1,5 bis 9, d. h. mindestens im Verhältnis 1 : 1,5 und höchstens im Verhältnis 1 : 9, bezogen auf das Gewicht von M1 und M2 zusammengesetzt sind. Durch die Variation des Mischungsverhältnisses M1 : M2 können in der Ziellegierung vorteilhaft unterschiedliche Legierungsgehalte erzeugt werden, wobei für diese unterschiedlichen Legierungsgehalte nur die beiden Lotkomponenten M1 und M2 als Vorrat gehalten werden müssen. Damit lassen sich vorteilhaft besonders wirtschaftlich Lotwerkstoffe herstellen, da die Kosten für die Lagerhaltung von lediglich wenigen Lotkomponenten vergleichsweise gering bleiben.

Eine andere Ausgestaltung der Erfindung sieht vor, dass in der Legierung ein Verhältnis Sb : Bi von 1 : 1,5 bis 3, d. h. mindestens ein Verhältnis von 1 : 1,5 und höchstens 1 : 3, insbesondere jedoch ein Verhältnis von 1 : 2, bezogen auf das Gewicht von Sb und Bi besteht. Für diesen Verhältnisbereich von Sb : Bi hat es sich gezeigt, dass sich eine besonders feine Gefügestruktur mit geringer Korngröße in der Lötverbindung ausbildet. Dabei konnte beobachtet werden, dass eine Lösung von bis zu 0,2 Gew.-% Ni im Gefüge eine kornfeinende Wirkung erzielt. Am stärksten zeigt sich dieser Effekt bei einem Mischungsverhältnis Sb : Bi von 1 : 2, so dass durch Variation dieses Verhältnisses Sb : Bi innerhalb der oben angegebenen Bandbreite die Korngröße gezielt eingestellt werden kann.

Eine weitere Ausgestaltung der Erfindung sieht vor, dass die Legierung einen Ni-Gehalt von 0,05 bis 0,2 Gew.-% aufweist. Bei diesen Gehalten von Ni unterhalb der Löslichkeitsgrenze von ca. 0,2 Gew.-% Ni im Gefüge der Lötverbindung treten Nihaltige Ausscheidungen nur begrenzt auf. Durch Überschreiten des Ni-Gehaltes von 0.2 Gew.-% vermehren sich die Ni-haltigen Ausscheidungen insbesondere an den Korngrenzen, wodurch der bereits erwähnte Vorgang der Dispersionsverfestigung gezielt beeinflusst werden kann. Selbstverständlich besteht auch bei Ni-Gehalten von weniger als 0.2 Gew.-% ein Zusammenhang zwischen einem steigenden Ni-Gehalt und einer Zunahme feindispers verteilter Ausscheidungen, allerdings wird die Bildung von Ausscheidungen unterhalb der Löslichkeitsgrenze von Ni durch die Einstellung von Gleichgewichten zwischen gelöstem und ausgeschiedenem Ni bestimmt.

Ein besonders vorteilhaftes, als Fertiglot verwendbares Lotmaterial besitzt die Zusammensetzung SnAg3,3-4,7Cu0.3-1,7Bi2Sb1Ni0,2. Die Vorteile bei der Verwendung der Legierungselemente Bi, Sb und Ni sind bereits erläutert worden. Bei der Basislegierung SnAgCu handelt es sich bei den angegebenen Zusammensetzungen um naheutektische Zusammensetzungen im Bezug auf das SnAgCu-Eutektikum. Bevorzugt werden untereutektische Zusammensetzungen des Basissystems, da für diese Zusammensetzungen beim Reflowlöten die Ausbildung feinerer Partikel (Ausscheidungen) beobachtet werden konnte.

Ein besonders vorteilhaftes, als Reaktionslot oder auch Schichtlot verwendbares Lotmaterial weist eine Lotkomponente M1 mit der Legierungszusammensetzung SnAg3,8Cu0,7Bi10Ni0,15 und eine weitere Lotkomponente M2 mit der Legierungszusammensetzung SnAg3,8Cu0,7Sb2,0Ni0,15 auf. Bei Bildung der Ziellegierung aus den Lotkomponenten wird dabei für das Basissystem SnAgCu vorteilhaft eine eutektische Zusammensetzung erreicht.

Vorteilhaft ist es, die Anteile der Lotkomponente M1 und der weiteren Lotkomponente M2 im Lotmaterial im Verhältnis M1 : M2 = 30 Gew.-% : 70 Gew.-% auszubilden. Der Bi-Gehalt beträgt dann 3 Gew.-% und der Sb-Anteil 1,4 Gew.-%, wodurch die Bedingung Sb : Bi = 1 : 2 vorteilhaft annähernd erreicht wird.

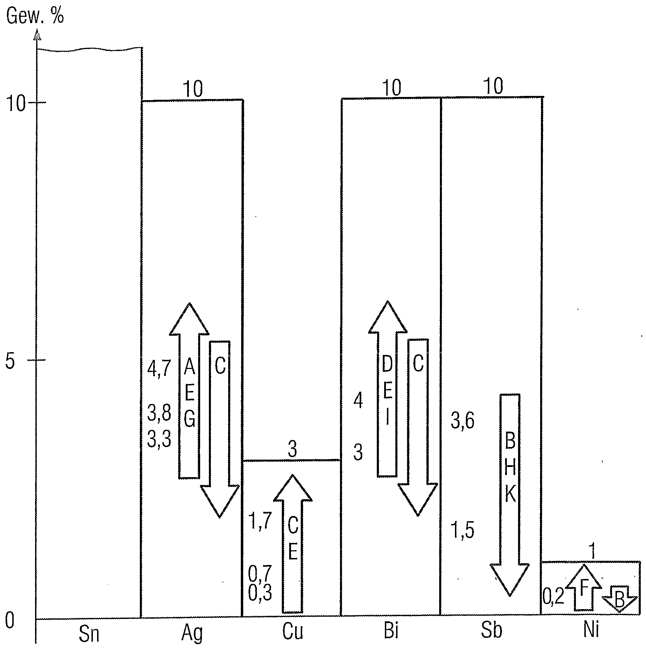

Der Einfluss einer Variation der Legierungsgehalte der einzelnen Legierungsanteile der erfindungsgemäßen Sechsstoff-Legierung sind in der Figur qualitativ dargestellt. Sn bildet dabei jeweils die Hauptkomponente, d. h. dass abhängig vom Legierungsgehalt der weiteren Legierungsanteile Sn einen Legierungsanteil aufweist, der die Legierung zu 100 Gew.-% ergänzt - selbstverständlich abzüglich weiterer, in Spuren vertretender Verunreinigungen, die im Zusammenhang dieser Anmeldung nicht als Legierungselemente verstanden werden sollen. Davon unabhängig können Verunreinigungen auch positive Auswirkungen auf die Verwendung des Lotmaterials haben. So lässt z. B. ein Phosphorgehalt im Promillebereich (gewichtsbezogen) eine Verbesserung der Oxidationseigenschaften der ausgebildeten Lötverbindung erwarten.

Die in der Figur neben den Pfeilen angegebenen Bereiche in Gew.-% für die einzelnen Legierungsanteile stellen Richtwerte dar, in denen es sich gezeigt hat, dass das aus vielen Faktoren bestehende Eigenschaftsprofil der erhaltenen Lötverbindung besonders vorteilhaft ausgebildet ist. Dieses ist jedoch nicht als Einschränkung der im Zusammenhang mit der Erfindung beanspruchten Bereiche der einzelnen Legierungsbestandteile zu verstehen. Vielmehr können die Anforderungen des Einzelfalles zu Lötlegierungszusammensetzungen führen, die den in der Figur dargestellten, vorteilhaften Bereich verlassen und im Einzelnen durch entsprechende Versuche ermittelt werden müssen.

Die Pfeile sind mit Buchstaben gekennzeichnet, welche die jeweilige, betrachtete Eigenschaft kennzeichnen, die in der unten stehenden Tabelle aufgeführt sind. Die Pfeile weisen jeweils in die Richtung, in der die entsprechende Eigenschaft durch Verändern des Legierungsanteils steigt.

| **Pfeil** | **betroffene Legierungsanteile** | **beeinflusste Eigenschaft** |
|---|---|---|
| A | Ag | Ablegierungswiderstand |
| B | Sb, Ni | Ablegierungsgeschwindigkeit |
| C | Ag, Cu, Bi | Thermische Stabilität/Kriechbeständigkeit |
| D | Bi | Druckfestigkeit |
| E | Ag, Cu, Bi | Scherbelastbarkeit |
| F | Ni | Unterstützung der Bildung von Ausscheidungen |
| G | Ag | Größe der Ausscheidungen |
| H | Sb | Homogenisierung des Gefüges |
| I | Bi | Absenkung des Schmelzbeginns des Schmelzbereiches |
| K | Sb | Absenkung der Obergrenze des Schmelzbereiches |

Das Lotmaterial kann in allen gebräuchlichen Formen als Barren, Stangen, Drähte, Folien, Pulver oder Beschichtungen zum Einsatz kommen. Beschichtet werden können z. B. die zu verbindenden Lötkontakte wobei es auch möglich ist, jeweils einen Kontakt mit der Lotkomponente M1 und dem anderen Kontakt mit der Lotkomponente M2 zu beschichten. Mittels Beschichten können auch Schichtlote hergestellt werden, in denen die Lotkomponenten M1 und M2 einander abwechseln. Grundsätzlich sind auch Lotmaterialien mit mehr als zwei Komponenten denkbar, wobei die Schichtlote dann in geeigneter Reihenfolge aufeinander geschichtet werden.

Die Lotkomponente M1 und M2 und eventuell weitere Lotkomponenten können auch in Form von Pulvern miteinander vermischt werden, so dass ein Reaktionslot entsteht. Das Lotmaterial in Pulverform kann selbstverständlich auch mittels eines Bindemittels zu einer Lotpaste verarbeitet werden.

## Patentansprüche

1. Lotmaterial, enthaltend eine ein Sechsstoffsystem bildende Legierung, die neben Sn (Zinn) als Hauptbestandteil aus 10 Gew.-% oder weniger Ag (Sil-ber), 10 Gew. -% oder weniger Bi (Wismut), 10 Gew.-% oder we- niger Sb (Antimon), 3 Gew.-% oder weniger Cu (Kupfer) und 1,0 Gew.-% oder weniger Ni (Nickel) besteht.

2. Lotmaterial, enthaltend mehrere Lotkomponenten mit derartigen Legierungszusammensetzungen und Anteilen im Lotmaterial, dass sich durch Verschmelzung der Lotkomponenten eine Legierung als Sechsstoffsystem bildet, die neben Sn (Zinn) als Hauptbestandteil aus 10 Gew.-% oder weniger Ag (Silber), 10 Gew.-% oder weniger Bi (Wismut), 10 Gew. -% oder weniger Sb (Antimon) und 3 Gew.-% oder weniger Cu (Kupfer) und Nickel besteht, **dadurch gekennzeichnet, dass** in zumindest einer der Lotkomponenten weiterhin Ni (Nickel) in einer derartigen Menge enthalten ist, dass die Legierung 1,0 Gew.-% oder weniger Ni enthält.

3. Lotmaterial nach Anspruch 1 oder 2, **dadurch gekennzeichnet, dass**, die Legierung 2 bis 5 Gew.-% Ag, 1 bis 3 Gew.-% Bi, 1 bis 3 Gew. -% Sb, 0,5 bis 1,5 Gew.-% Cu, und 0,05 bis 0,3 Gew.-% Ni enthält.

4. Lotmaterial nach Anspruch 2, **dadurch gekennzeichnet, dass** eine Lotkomponente M1 und eine weitere Lotkomponente M2 vorgesehen sind, wobei die Lotkomponente M1 neben Sn als Hauptbestandteil 2 bis 5 Gew.-% Ag, 3 bis 12 Gew.-% Bi, 0,5 bis 1,5 Gew.-% Cu und 0,1 bis 0,3 Gew. -% Ni und die weitere Lotkomponente M2 neben Sn als Hauptbestandteil 2 bis 5 Gew.-% Ag, 0,5 bis 1,5 Gew. -% Cu, 1 bis 5 Gew. -% Sb und 1,0 Gew.-% Ni enthält.

5. Lotmaterial nach Anspruch 2, **dadurch gekennzeichnet, dass** eine Lotkomponente M1 und eine weitere Lotkomponente M2 vorgesehen sind, wobei die Lotkomponente M1 neben Sn als Hauptbestandteil 2 bis 5 Gew.-% Ag, 3 bis 6 Gew.-% Bi, 1 bis 3 Gew.-% Sb und 0,5 bis 1,5 Gew.-% Cu und die weitere Lotkomponente M2 neben Sn als Hauptbestandteil 2 bis 5 Gew.-% Ag, 0,5 bis 1,5 Gew.-% Cu, und 1,0 Gew.-% Ni enthält.

6. Lotmaterial nach Anspruch 4 oder 5, **dadurch gekennzeichnet, dass** die Lotkomponente M1 und die weitere Lotkomponente M2 im Verhältnis M1 : M2 = 1 : 1,5 bis 9, bezogen auf das Gewicht von M1 und M2 zusammengesetzt sind.

7. Lotmaterial nach einem der vorangehenden Ansprüche, **dadurch gekennzeichnet, dass** in der Legierung ein Verhältnis Sb : Bi von 1 : 1,5 bis 3, insbesondere ein Verhältnis von 1 : 2, bezogen auf das Gewicht von Sb und Bi besteht.

8. Lotmaterial nach Anspruch 7, **dadurch gekennzeichnet, dass** die Legierung einen Ni-Gehalt von 0,05 bis 0,2 Gew.-% aufweist.

9. Lotmaterial nach Anspruch 1, **gekennzeichnet durch** die Zusammensetzung SnAg3,3-4,7Cu0,3-1,7Bi2Sb1 Ni0,2.

10. Lotmaterial nach Anspruch 2, **dadurch gekennzeichnet, dass** eine Lotkomponente M1 mit der Legierungszusammensetzung SnAg3,8Cu0,7Bi10Ni0,15 und eine weitere Lotkomponente M2 mit der Legierungszusammensetzung SnAg3,8Cu0,7Sb2,0NiO,15 vorgesehen sind.

11. Lotmaterial nach Anspruch 10, **dadurch gekennzeichnet, dass** die Anteile der Lotkomponente M1 und der weiteren Lotkomponente M2 im Lotmaterial das Verhältnis M1 : M2 = 30 Gew.-% : 70 Gew.-% bilden.

## Claims

1. A solder material containing an alloy that forms a six-component system and consists, in addition to Sn (tin) as the main constituent, of 10 wt.% or less Ag (silver), 10 wt.% or less Bi (bismuth), 10 wt.% or less Sb (antimony), 3 wt.% or less Cu (copper) and 1.0 wt.% or less Ni (nickel).

2. A solder material containing a plurality of solder components having alloy compositions and proportions in the solder material such that an alloy in the form of a six-component system is formed by fusing the solder components, which alloy consists, in addition to Sn (tin) as the main constituent, of 10 wt.% or less Ag (silver), 10 wt.% or less Bi (bismuth), 10 wt.% or less Sb (antimony) and 3 wt.% or less Cu (copper) and nickel, **characterized in that** Ni (Nickel) is also contained in such an amount in at least one of the solder components that the alloy contains 1.0 wt.% or less Ni.

3. The solder material according to claim 1 or 2, **characterized in that** the alloy contains 2 to 5 wt.% Ag, 1 to 3 wt.% Bi, 1 to 3 wt.% Sb, 0.5 to 1.5 wt.% Cu, and 0.05 to 0.3 wt.% Ni.

4. The solder material according to claim 2, **characterized in that** a solder component M1 and a further solder component M2 are provided, the solder component M1 containing, in addition to Sn as the main constituent, 2 to 5 wt.% Ag, 3 to 12 wt.% Bi, 0.5 to 1.5 wt.% Cu and 0.1 to 0.3 wt.% Ni, and the further solder component M2 contains, in addition to Sn as the main constituent, 2 to 5 wt.% Ag, 0.5 to 1.5 wt.% Cu, 1 to 5 wt.% Sb and 1.0 wt.% Ni.

5. The solder material according to claim 2, **characterized in that** a solder component M1 and a further solder component M2 are provided, the solder component M1 containing, in addition to Sn as the main constituent, 2 to 5 wt.% Ag, 3 to 6 wt.% Bi, 1 to 3 wt.% Sb and 0.5 to 1.5 wt.% Cu and the further solder component M2 contains, in addition to Sn as the main constituent, 2 to 5 wt.% Ag, 0.5 to 1.5 wt.% Cu, and 1.0 wt.% Ni.

6. The solder material according to claim 4 or 5, **characterized in that** the solder component M1 and the further solder component M2 are combined in the ratio M1:M2=1:1.5 to 9, with respect to the weight of M1 and M2.

7. The solder material according to one of the preceding claims, **characterized in that** the alloy has a ratio Sb:Bi of 1:1.5 to 3, in particular a ratio of 1:2, with respect to the weight of Sb and Bi.

8. The solder material according to claim 7, **characterized in that** the alloy has a Ni content of 0.05 to 0.2 wt.%.

9. The solder material according to claim 1, **characterized by** the composition SnAg3.3-4.7Cu0.3-1.7Bi2Sb1Ni0.2.

10. The solder material according to claim 2, **characterized in that** a solder component M1 having the alloy composition SnAg3.8Cu0.7Bi10Ni0.15 and a further alloy component M2 having the solder composition SnAg3.8Cu0.7Sb2.0Ni0.15 are provided.

11. The solder material according to claim 10, **characterized in that** the proportions of the solder component M1 and of the further solder component M2 in the solder material form the ratio M1:M2 = 30 wt.%:70 wt.%.

## Revendications

1. Matière de soudage, contenant un alliage qui forme un système à six composantes et qui est constitué, en plus de Sn (étain) comme composant principal, de 10% en poids d'Ag (argent) ou moins, de 10% de Bi (bismuth) ou moins, de 10% en poids de Sb (antimoine) ou moins, de 3% en poids de Cu (cuivre) ou moins et de 1,0% de Ni (nickel) ou moins.

2. Matière de soudage contenant plusieurs composants de soudage ayant des compositions d'alliage et les proportions dans la matière de soudage telle qu'il se forme, par fusion des composants de soudage, un alliage sous la forme d'un système à six composantes qui est constitué, en plus de Sn (étain) comme composant principal, de 10% en poids d'Ag (argent) ou moins, de 10% de Bi (bismuth) ou moins, de 10% en poids de Sb (antimoine) ou moins, de 3% en poids de Cu (cuivre) ou moins et du nickel, **caractérisée en ce que** du Ni (nickel) est contenu dans au moins un des composants de soudage dans une quantité telle que l'alliage contient 1,0% de Ni ou moins.

3. Matière de soudage selon la revendication 1 ou 2, **caractérisé en ce que** l'alliage contient 2 à 5% en poids d'Ag, 1 à 3% en poids de Bi, 1 à 3% en poids de Sb, 0,5 à 1,5% en poids de Cu et 0,05 à 0,3% de Ni.

4. Matière de soudage selon la revendication 2, **caractérisée en ce qu'**il est prévu un composant de soudage M1 et un autre composant de soudage M2, le composant de soudage M1 contenant, en plus de Sn comme composant principal, 2 à 5% en poids d'Ag, 3 à 12% en poids de Bi, 0,5 à 1,5% en poids de Cu et 0,1 à 0,3% de Ni et l'autre composant de soudage M2 contenant, en plus de Sn comme composant principal, 2 à 5% en poids d'Ag, 0,5 à 1,5% en poids de Cu, 1 à 5% en poids de Sb et 1,0% en poids de Ni.

5. Matière de soudage selon la revendication 2, **caractérisée en ce qu'**il est prévu un composant de soudage M1 et un autre composant de soudage M2, le composant de soudage M1 contenant, en plus de Sn comme composant principal, 2 à 5% en poids d'Ag, 3 à 6% en poids de Bi, 1 à 3% en poids de Sb et 0,5 à 1,5% en poids de Cu et l'autre composant de soudage M2 contenant, en plus de Sn comme composant principal, 2 à 5% en poids d'Ag, 0,5 à 1,5% en poids de Cu, et 1,0% en poids de Ni.

6. Matière de soudage selon la revendication 4 ou 5, **caractérisée en ce que** le composant de soudage M1 et l'autre composant de soudage M2 sont composés dans le rapport M1 : M2 = 1 : 1,5 à 9, par rapport au poids de M1 et M2.

7. Matière de soudage selon l'une des revendications précédentes, **caractérisée en ce que** l'alliage a un rapport Sb : Bi de 1 : 1,5 à 3, en particulier un rapport de 1 : 2, par rapport au poids de Sb et Bi.

8. Matière de soudage selon la revendication 7, **caractérisée en ce que** l'alliage a une teneur en Ni de 0,05 à 0,2% en poids.

9. Matière de soudage selon la revendication 1, **caractérisée par** la composition SnAg3,3-4,7Cu0,3-1,7Bi2Sb1Ni0,2.

10. Matière de soudage selon la revendication 2, **caractérisée en ce qu'**il est prévu un composant de soudage M1 ayant la composition d'alliage SnAg3,8Cu0,7Bi10Ni0,15, et un autre composant de soudage M2 ayant la composition d'alliage SnAg3,8Cu0,7Sb2,0Ni0,15.

11. Matière de soudage selon la revendication 10, **caractérisée en ce que** les proportions du composant de soudage M1 et l'autre composant de soudage M2 dans la matière de soudage forment le rapport M1 : M2 = 30% en poids : 70% en poids.
